# EUROPÄISCHE PATENTSCHRIFT

(11) **EP 0 736 214 B1**
(45) Veröffentlichungstag und Bekanntmachung des Hinweises auf die Patenterteilung: **10.03.1999**
(21) Anmeldenummer: 95902754.1
(22) Anmeldetag: 12.12.1994
(51) Int. Cl.: G21C 15/18

(54) **SICHERHEITSEINSPEISE- UND BORIERSYSTEM FÜR EINEN DRUCKWASSERREAKTOR UND VERFAHREN ZUM BETRIEB EINES SOLCHEN SYSTEMS**
SAFETY FEED AND BORATING SYSTEM FOR A PRESSURISED WATER REACTOR AND PROCESS FOR OPERATING SUCH A SYSTEM
SYSTEME D'ALIMENTATION DE SECURITE ET DE TRAITEMENT AU BORE POUR UN REACTEUR A EAU SOUS PRESSION PERMETTANT LE PROCEDE DE FONCTIONNEMENT DUDIT SYSTEME

(30) Priorität: 23.12.1993 DE 4344323
(43) Veröffentlichungstag der Anmeldung: 09.10.1996
(73) Patentinhaber: SIEMENS AKTIENGESELLSCHAFT, 80333 München (DE)
(72) Erfinder: HARTMANN, Heinz-Werner, D-91054 Buckenhof (DE)
(86) Internationale Anmeldenummer: DE9401474
(87) Internationale Veröffentlichungsnummer: WO9517754

(56) Entgegenhaltungen:
- EP-A- 0 063 994
- DE-A- 2 521 269
- DATABASE WPI Week 8607, Derwent Publications Ltd., London, GB; AN 86-046653 ANONYMOUS 'Emergency borating system for pressurised water reactor' 'RD 261008'(ANONYMOUS) 10. Januar 1986

## Beschreibung

Die Erfindung bezieht sich auf ein Sicherheitseinspeise- und Boriersystem für einen Druckwasserreaktor nach dem Oberbegriff des Anspruchs 1 sowie auf ein Verfahren zum Betrieb des Systems nach dem Oberbegriff des Anspruchs 6.

Bei einem Störfall eines Druckwasserreaktors muß wegen der notwendigen Wärmeabfuhr ausreichend Primärkühlwasser im Primärkreislauf vorhanden sein oder dorthin nachgespeist werden können. Darüber hinaus muß aus kernphysikalischen Gründen der Reaktor mit Borzusatz unterkritisch gemacht und gehalten werden können.

Bisher wurden nach der DE-C3-22 07 870 für diese in bezug auf die Einspeisung von Kühlwasser an sich gemeinsame Aufgabe zwei getrennte Systeme eingesetzt, und zwar einerseits ein Sicherheitseinspeisesystem zur Ergänzung des Primärkühlwassers bei Kühlmittelverluststörfall oder Undichtigkeit von Dampferzeugerheizrohren und andererseits ein Zusatzboriersystem für das Abschalten des Reaktors (z.B. nach Einwirkung von außen oder Ausfall von Steuerstäben) und zum normalen Abfahren des Reaktors. Beide Systeme zusammen erfordern gegenüber einem einzigen System etwa den doppelten Aufwand in bezug auf Rohrleitungen, Armaturen, Leit- und Meßtechnik und Durchdringungen durch den Sicherheitsbehälter.

In der WO 90/09025 ist ein an den Primärkreislauf einer Kernkraftanlage anschließbarer Hilfskreislauf beschrieben. Der Hilfskreislauf dient der Mengenregelung sowie der Beeinflussung der chemischen Zusammensetzung des Primärkühlmittels, insbesondere des Borgehaltes. Der Hilfskreislauf weist hierzu Mittel zur Entnahme von Primärkühlmittel sowie zur Rückspeisung von Primärkühlmittel in den Primärkühlkreislauf auf. In dem Hilfskreislauf ist ein großes Wasserdampf-Wasser-Reservoir, welches verschiedene Funktionen erfüllt, angeordnet. In einem unteren Bereich des Reservoirs wird boriertes Wasser vorgehalten, welches zum Zwecke einer Sicherheitseinspeisung über eine separate und hinreichend dimensionierte Leitung unmittelbar in den Primärkühlkreislauf stromab der Hauptkühlmittelpumpe einspeisbar ist. Das zur Mengenregelung in dem Reservoir vorgehaltene Primärkühlmittel wird über eine Rückführpumpe durch eine Rückführ-Leitung unmittelbar der Hauptkühlmittelpumpe zugeführt. Eine Sicherheitseinspeisung erfolgt ungeregelt infolge des in dem Reservoir herrschenden Druckes, wohingegen eine Mengenregulierung und eine chemische Beeinflussung des Primärkühlmittels hiervon völlig separat dem Reservoir vor- oder nachgeschaltet erfolgt. Sicherheitseinspeisung und Regulierung der Menge und der Zusammensetzung des Primärkühlmittels sind somit - außer in bezug auf eine gemeinsame Benutzung eines Reservoirs - verfahrenstechnisch völlig voneinander getrennt.

In der Europäischen Patentanmeldung 0 405 720 A2 wird ein passives Sicherheitseinspeisesystem beschrieben, das auf Dichteunterschieden im Wasser beruht und durch Naturumlauf die gewünschte Borkonzentration aufrechterhalten soll.

Ein weiteres auf dem Prinzip der Ausbildung eines Naturumlaufs basierendes Not- und Nachwärmesystem ist in der DE 25 21 269 Al angegeben. Das darin beschriebene Sicherheitseinspeisesystem weist einen Not- und Nachwärmekühlkreislauf für einen Druckwasserreaktor auf. In dem Kreislauf ist ein Nachwärmekühler mit einem hierzu parallel geschalteten Borsäurebehälter angeordnet, denen eine Parallelschaltung aus einer Pumpe und einer mit einer Klappe verschließbaren Leitung vorgeschaltet ist. Über die Pumpe wird bei intaktem Primärkühlkreislauf Wasser durch den Nachwärmekühler gepumpt. Im Notfall öffnet die Klappe, und es bildet sich ein Naturumlauf durch den Nachwärmekühler aus. Zu einer Senkung der Reaktivität des Primärkühlmittels kann die Pumpe durch Öffnung entsprechender Ventile dem Borsäurebehälter vorgeschaltet werden, wodurch eine Einspeisung von Borsäure in den Primärkühlkreis ermöglicht wird. Dem Borsäurebehälter und dem Nachwärmekühler ist eine einzige gemeinsame Drossel mit einstellbarem Durchlaßquerschnitt nachgeschaltet. Solche Naturumlaufsysteme sind kompliziert und lassen sich den unterschiedlichen Schadensfällen kaum anpassen.

Aus der EP 0 063 994 A1 ist ein Sicherheitseinspeisesystem für einen Druckwasserreaktor bekannt, bei dem zwei Pumpen in Serie geschaltet sind. Die zweite Pumpe ist durch einen Bypaß überbrückt, in dem sich ein Absperrglied befindet. Bei geöffnetem Absperrglied wird das Einspeisen von Kühlwasser allein durch die erste Pumpe bewirkt.

Ausgehend von den bekannten Systemen zur Schadensbegrenzung bei einem Störfall an einem Druckwasserreaktor liegt der Erfindung die Aufgabe zugrunde, unter Beachtung der im Reaktorbau üblichen Redundanz ein Sicherheitseinspeise- und Boriersystem und ein Verfahren zum Betrieb eines solchen Systems so auszubilden, daß mit verringertem Aufwand zusätzliche Sicherheit erreicht wird und die Einspeisemenge an Kühlwasser dem Störfallablauf angepaßt werden kann.

Die Aufgabe, ein System auszubilden, wird nach der Erfindung dadurch gelöst, daß den Pumpen in Strömungsrichtung ein Einspeisestrang nachgeschaltet ist, von dem eine Mindestmengenleitung abzweigt, die in Reihe mit einer von mindestens zwei Mindestmengenzweigleitungen schaltbar ist, von denen die eine Zweigleitung eine erste Drosselstelle für eine große Mindestmenge und die andere Zweigleitung eine zweite Drosselstelle für eine kleine Mindestmenge aufweist.

Über die Sicherheitseinspeisepumpe, welche eine Hochdruckeinspeisung ermöglicht, kann unmittelbar in das Reaktorkühlsystem, insbesondere in das Primärsystem des Reaktordruckbehälters eingespeist werden. Durch die mögliche Reihenschaltung aus Zusatzborierpumpe und Sicherheitseinspeisepumpe ist die Einspeisemenge sowie der Borgehalt des eingespeisten Kühlwassers für die Beherrschung einer Vielzahl anomaler Betriebszustände einstellbar. Insbesondere kann die Förderhöhe der Pumpen gezielt eingestellt werden.

Mit der Mindestmengenleitung wird vorteilhafterweise die Förderhöhe der Pumpen reguliert und eingestellt. Mit der ersten Drosselstelle für eine große Mindestmenge wird eine möglichst geringe Förderhöhe erzielt und die zweite Drosselstelle für eine kleine Mindestmenge dient zur Einstellung großer Förderhöhen der Pumpen.

Die mit der Erfindung erzielbaren Vorteile sind vor allem darin zu sehen, daß man Förderhöhe und Durchsatz des gemeinsamen Systems optimal an die jeweiligen Anforderungen anpassen und auf ein getrenntes Hochdruck-Boriersystem mit seinem zusätzlichen Aufwand verzichten kann.

Vorzugsweise ist die Parallelschaltung aus Zusatzborierpumpe und Rückschlagventil der Sicherheitseinspeisepumpe in Strömungsrichtung nachgeschaltet. Je nach betrieblichen Anforderungen und Gegebenheiten kann auch die Sicherheitseinspeisepumpe nachgeschaltet sein.

Das Absperrorgan ist beispielsweise ein Rückschlagventil.

Eine vorteilhafte Ausgestaltung besteht darin, als Zusatzborierpumpe eine Kreiselpumpe zu verwenden. Gegenüber den bisher als Zusatzborierpumpen verwendeten Kolbenpumpen lassen sich Kreiselpumpen mittels einer Mindestmengenleitung besser beeinflussen. Insbesondere wird keine druckbegrenzende Überströmeinrichtung benötigt.

Vorzugsweise dient das Sicherheitseinspeise- und Boriersystem in einem Druckwasserreaktor der Beherrschung von anomalen Betriebszuständen, wie
a) Verlust von Kühlmittel, insbesondere aus dem Primärsystem des Druckwasserreaktors, sowie Verlust von Kühlwasser infolge eines Lecks in einem Heizrohrs eines Dampferzeugers,
b) kleines Leck im Primärsystem mit ungenügender sekundärseitiger Wärmeabfuhr,
c) Füllstandshaltung im Reaktordruckbehälter bei Nullast heiß und nicht verfügbarem Volumenregelsystem, jedoch intaktem Primärsystem,
d) Borieren des Primärsystems.

Unter Nullast heiß wird hierbei der Zustand des Druckwasserreaktors verstanden, der dadurch gegeben ist, daß keine thermische Leistung an die Turbinen abgegeben wird, Nachzerfallswärme auftritt und das Primärsystem noch unter hohem Druck und hoher Temperatur steht. Das Volumenregelsystem hat im Normalbetrieb und bei leichten Betriebsstörungen die Aufgabe den Wasserstand im Druckhalter zu regeln, der sich durch Temperaturänderungen, durch die Wasserentnahme für die Kühlmittelreinigung und durch eventuelle Leckagen ändert. Es kann auch so ausgeführt sein, daß es keine Sicherheitsfunktionen ausübt, sondern diese Sicherheitsfunktionen von dem Boriersystem übernommen werden.

Die Aufgabe, ein Verfahren zum Betrieb eines Sicherheitseinspeise- und Boriersystems anzugeben, wird durch die Merkmalskombination des Patentanspruches 6 gelöst.

Das dort geschildert Verfahren dient zur Beherrschung der oben aufgeführten anomalen Betriebsfälle.

Im Fall (a) wird die Zweigleitung mit der Drosselstelle für große Mindestmengen geöffnet und die Sicherheitseinspeisepumpe in Betrieb gesetzt. Hierdurch wird über die Sicherheitseinspeisepumpe mit einer verringerten Förderhöhe Kühlmittel unmittelbar in das Primärsystem nachgespeist. Im Fall (b) wird die Zweigleitung mit der Drosselstelle für kleine Mindestmenge geöffnet und ebenfalls nur die Sicherheitseinspeisepumpe in Betrieb genommen. Im Fall (c) wird die Zweigleitung mit der Drosselstelle für kleine Mindestmenge geöffnet und beide Pumpen in Betrieb gesetzt, wodurch eine große Förderhöhe, entsprechend beispielsweise einem Druck von 130 bar, erreicht wird. Im Fall (d) wird die Mindestmengenleitung abgesperrt und die Sicherheitseinspeisepumpe sowie die Zusatzborierpumpe in Betrieb gesetzt. Hierdurch wird die größtmögliche Förderhöhe erreicht und eine Einspeisung von Kühlmittel erfolgt entweder unmittelbar in eine kalte Hauptkühlmittelleitung des Primärsystems oder in den Druckhalter, welcher an eine heiße Hauptkühlmittelleitung des Primärsystems angeschlossen ist.

Durch dieses neue Verfahren werden die Funktionen eines Sicherheitseinspeisesystems und eines Boriersystems - ausgehend von der gemeinsamen Aufgabe, boriertes Wasser einzuspeisen, - derart zusammengefaßt, daß sie mit einem Einspeisestrang pro redundantes Sicherheitseinspeise- und Boriersystem ausgeführt werden können.

Hierzu werden die Sicherheitseinspeisepumpe und die Zusatzborierpumpe in Reihe geschaltet, jedoch so, daß die Sicherheitseinspeisepumpe durch einen Bypass an der Zusatzborierpumpe vorbei fördern kann. Die Förderhöhe des Sicherheitseinspeisesystems wird also durch gezieltes Einschalten der Zusatzborierpumpe und/oder Öffnen einer Mindestmengenleitung mit verschiedenen Drosselstellen dem gerade vorliegenden Störfallablauf angepaßt.

Weitere Merkmale und Vorteile des Erfindungsgegenstands sowie seine Wirkungsweise werden im folgenden anhand eines Ausführungsbeispiels, das in fünf Figuren dargestellt ist, näher erläutert. Darin zeigen:

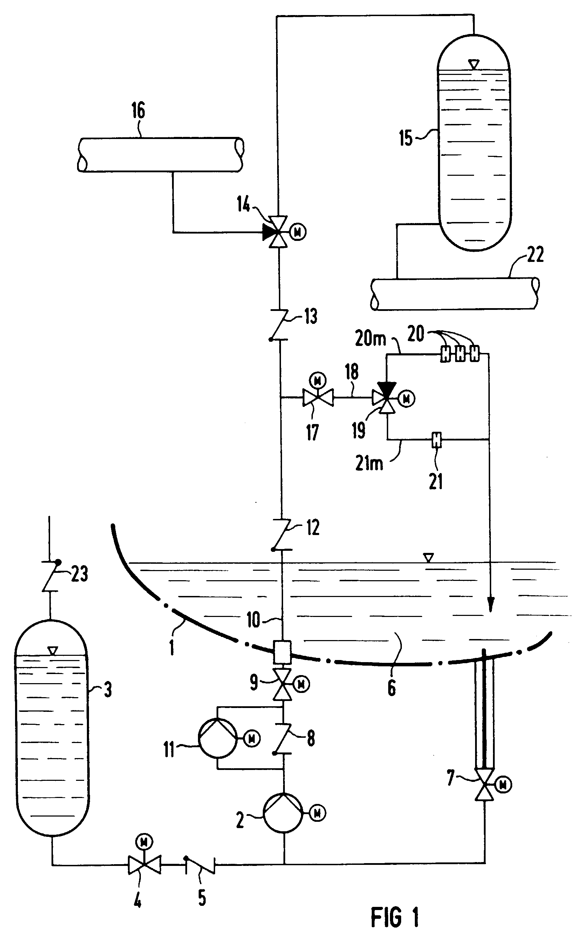

FIG 1 eine schematisierte Schaltung des Systems,

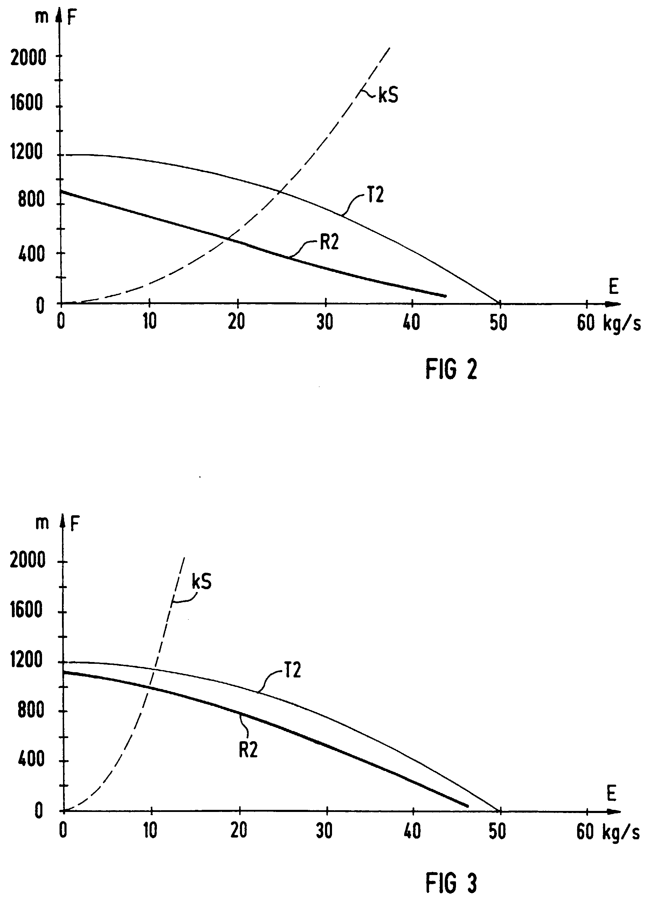

FIG 2 bis 5 diverse Kennlinien für System und/oder Pumpen. Dabei.ist die dünne gestrichelte Linie KS die Kennlinie des Systems, die dünne ausgezogene Linie T2,11, T11, T2 die theoretische Kennlinie der Pumpe(n) 2 bzw. 11 und die dicke ausgezogene Linie R2, R2,11 die tatsächliche Kennlinie der Pumpe 2 bzw. 11, die sich aus der theoretischen Kennlinie abzüglich der jeweiligen Mindestmenge und/oder durch Addition zweier Kennlinien ergibt. Auf der waagerechten Achse ist die Einspeiserate E in kg/s und auf der senkrechten Achse die Förderhöhe F bzw. der Gegendruck in m angegeben.
In Figur 1 ist der Sicherheitsbehälter oder das Containment 1 eines Druckwasserreaktors als dicke strichpunktierte Linie angedeutet. Außerhalb dieses Containments 1 ist eine Sicherheitseinspeisepumpe 2 angeordnet, die entweder aus einem Borierbehälter 3, und zwar über ein Motorventil 4 und ein Rückschlagventil 5, oder aus dem Sumpf 6 des Containments 1 über ein Motorventil 7 ansaugen kann. In beiden Fällen drückt sie über ein Rückschlagventil 8 und ein weiteres Motorventil 9 in einen Einspeisestrang 10, der in das Containment 1 führt. Parallel zum Rückschlagventil 8 ist eine Zusatzborierpumpe 11, insbesondere eine Kreiselpumpe, geschaltet, die bei Bedarf eingeschaltet wird und dabei den Druck im Einspeisestrang 10 erhöht. Der Einspeisestrang 10 führt über zwei Rückschlagventile 12 und 13 zu einem Zweiwegeventil 14 und von da aus entweder zu einem Druckhalter 15 oder zu einer nicht näher dargestellten kalten Hauptkühlmittelleitung 16 des Primärsystems.

Zwischen den beiden Rückschlagventilen 12 und 13 zweigt über ein Motorventil 17 eine Mindestmengenleitung 18 ab, die mit einem Zweiwegeventil 19 entweder über eine erste Mindestmengen-Zweigleitung 20m mit einer Drosselstelle 20 für eine kleine Mindestmenge oder über eine zweite MindestmengenZweigleitung 21m mit einer Drosselstelle 21 für eine große Mindestmenge in den Sumpf 6 entlastet wird. Je nach Wahl des Wegs über die Drosselstelle 21 oder 20 kann der Druck im Einspeisestrang 10 erniedrigt oder erhöht werden. Bei geschlossenem Motorventil 17 wird der höchstmögliche Druck erreicht.

Der Druckhalter 15 ist verbunden mit einer heißen Hauptkühlmittelleitung 22 des Primärsystems. Der Borierbehälter 3 hat an seiner Oberseite ein Belüftungsventil 23, das bei einem durch Entnahme entstehenden Unterdruck aufmacht.

In diesem Beispiel ist nur ein Einspeisestrang 10 dargestellt. Je nach geforderter Redundanz sind tatsächlich zwei oder mehrere solcher Stränge 10 vorhanden, die aber nicht alle mit einer Zusatzborierpumpe 11 ausgerüstet sein müssen.

Figur 2 zeigt die Kennlinien KS, TS, R2 für den Fall von Dampferzeuger-Heizrohrlecks und Kühlmittelverluststörfällen, d.h. die Zweigleitung 20m mit der Drosselstelle 20 für die kleine Mindestmenge ist abgesperrt, die Zweigleitung 21m mit der Drosselstelle 21 für die große Mindestmenge ist offen, die Sicherheitseinspeisepumpe 2 ist in Betrieb, und die Zusatzborierpumpe 11 ist nicht in Betrieb (Betriebsfall a). Kühlwasser aus dem Sumpf 6 wird über den Einspeisestrang 10 in die heiße Hauptkühlmittelleitung 16 eingespeist.

Figur 3 zeigt die Kennlinien KS, T2, R2 für den Fall von kleinen Lecks im Primärkühlsystem des Druckwasserreaktors mit gestörter Wärmeabfuhr in dem Sekundärkühlsystem des Druckwasserreaktors, d.h. die Drosselstelle 20 für keine Mindestmenge in der Zweigleitung 20m ist offen, die Sicherheitseinspeisepumpe 2 ist in Betrieb, und die Zusatzborierpumpe 11 ist nicht in Betrieb (Betriebsfall b). Eine Einspeisung von Kühlwasser aus dem Sumpf 6 erfolgt somit mit erhöhtem Druck in das Primärkühlsystem.

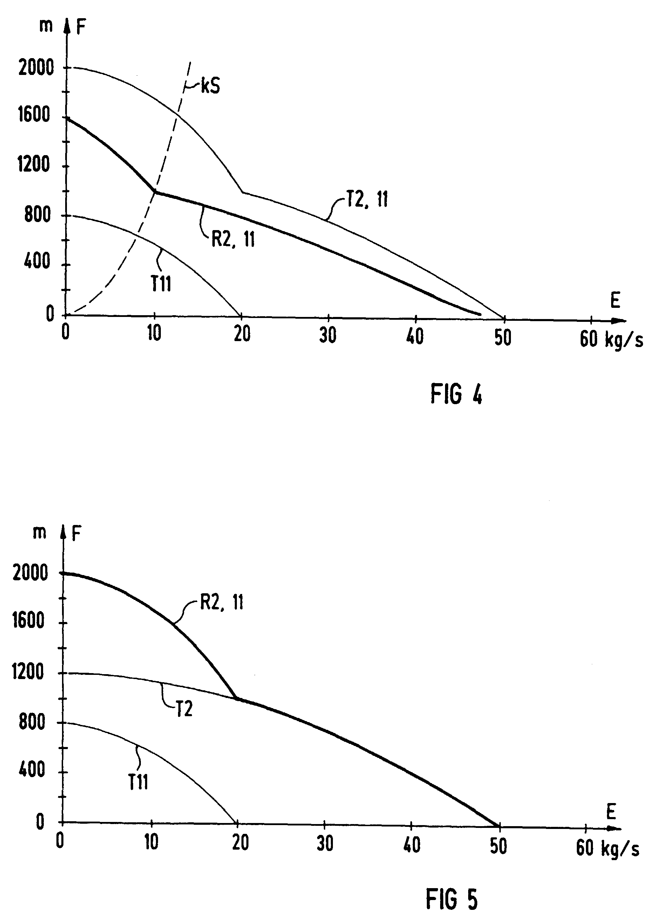

Figur 4 zeigt die Kennlinien KS, T2,11, R2,11 für den Fall der Füllstandshaltung bei Nullast heiß und nicht verfügbarem Volumenregelsystem, jedoch intaktem Primärkühlsystem, d.h. die Drosselstelle 20 für die kleine Mindestmenge in der Zweigleitung 20m ist offen, die Sicherheitseinspeisepumpe 2 und Zusatzborierpumpe 11 sind in Betrieb. Ihre Förderhöhen addieren sich (Betriebsfall c).

Figur 5 zeigt die Kennlinien für den Fall der Borierung des Primärsystems oder Sprühen von Kühlmittel in den Druckhalter 15, d.h. die Mindestmengenleitung 18 ist durch das Ventil 17 geschlossen, und die Sicherheitseinspeisepumpe 2 und die Zusatzborierpumpe 11 sind in Betrieb. Ihre Förderhöhen addieren sich (Betriebsfall d). Je nachdem ob eine Borierung des Primärsystems erfolgt - das Motorventil 4 ist hierbei geöffnet - oder ob in den Druckbehälter 15 eingesprüht wird, ergibt sich eine jeweils andere nicht dargestellte Kennlinie für das System.

Beispielsweise kann die Sicherheitseinspeisepumpe 2 eine Null-Förderhöhe, d.h. ihre maximale Förderhöhe bei geschlossener Mindestmengeleitung 18, entsprechend ca. 120 bar haben, während ihre tatsächliche Förderhöhe in Bereitschaftsstellung, d.h. bei geöffneter kleiner Mindestmengenleitung, jedoch nur 90 bar entspricht. Die gemeinsame Förderhöhe beider Pumpen 2,11 kann bei geöffneter Zweigleitung 20m, d.h. bei kleiner Mindestmenge, auf 150 bar begrenzt werden.

Aus den vorstehenden Erläuterungen der Figuren 2 bis 5 wird deutlich, daß mit der Erfindung ein Verfahren zum Betrieb eines Druckwasserreaktors mit Sicherheitseinspeise- und Boriersystem sowie mit einem Reaktorkühlsystem für den Reaktordruckbehälter zur Beherrschung der vier in den Figuren 2 bis 5 dargestellten Betriebsfälle verwirklicht ist, wobei die Betriebsfälle wie folgt definiert sind:
a) Dampferzeugerheizrohrleck und Kühlmittelverluststörfall,
b) kleines Leck im Primärsystem mit ungenügender sekundärseitiger Wärmeabfuhr,
c) Füllstandshaltung im Reaktordruckbehälter bei Nullast heiß und nicht verfügbarem Volumenregelsystem, jedoch intaktem Rückkühlsystem,
d) Borieren des Primärsystems.

Dieses Verfahren ist dadurch gekennzeichnet, daß
im Fall (a):
   die Zweigleitung 21m mit Drosselstelle 21 für große Mindestmenge geöffnet und die Sicherheitseinspeisepumpe 2 in Betrieb gesetzt wird,
im Fall (b):
   die Zweigleitung 20m mit Drosselstelle 20 für kleine Mindestmenge geöffnet und von den beiden Pumpen 2,11 die Sicherheitseinspeisepumpe 2 in Betrieb genommen wird,
im Fall (c):
   die Zweigleitung 20m mit Drosselstelle 20 für kleine Mindestmenge geöffnet und die Sicherheitseinspeisepumpe 2 sowie die Zusatzborierpumpe 11 in Betrieb gesetzt werden und
im Fall (d):
   die Mindestmengenleitung 18 abgesperrt und die Sicherheitseinspeisepumpe 2 sowie die Zusatzborierpumpe 11 in Betrieb gesetzt werden.

Zur Beherrschung dieser Betriebsfälle dienen die vorstehend anhand der Figuren 2 bis 5 erläuterten Maßnahmen.

## Patentansprüche

1. Sicherheitseinspeise- und Boriersystem (24) für einen Druckwasserreaktor mit einer Sicherheitseinspeisepumpe (2) und einer Zusatzborierpumpe (11), wobei der Zusatzborierpumpe (11) eine Bypass-Leitung mit einem Absperrorgan (8) parallel geschaltet ist und diese Parallelschaltung aus Zusatzborierpumpe (11) und Absperrorgan (8) mit der Sicherheitseinspeisepumpe (2) in Reihe geschaltet ist,
**dadurch gekennzeichnet**, daß den Pumpen (2,11) in Strömungsrichtung ein Einspeisestrang (10) nachgeschaltet ist, von dem eine Mindestmengenleitung (18) abzweigt, die in Reihe mit einer von mindestens zwei Mindestmengenzweigleitungen (20m, 21m) schaltbar ist, von denen die eine Zweigleitung (21m) eine erste Drosselstelle (21) für eine große Mindestmenge und die andere Zweigleitung (20m) eine zweite Drosselstelle (20) für eine kleine Mindestmenge aufweist.

2. Sicherheitseinspeise- und Boriersystem (24) nach Anspruch 1,
**dadurch gekennzeichnet**, daß die Parallelschaltung aus Zusatzborierpumpe (11) und Absperrorgan (8) der Sicherheitseinspeisepumpe (2) in Strömungsrichtung nachgeschaltet ist.

3. Sicherheitseinspeise- und Boriersystem (24) nach einem der Ansprüche 1 oder 2,
**dadurch gekennzeichnet,** daß das Absperrorgan (8) ein Rückschlagventil (8) ist.

4. Sicherheitseinspeise- und Boriersystem (24) nach einem der vorhergehenden Ansprüche,
**dadurch gekennzeichnet**, daß die Zusatzborierpumpe (11) eine Kreiselpumpe ist.

5. Verwendung eines Sicherheitseinspeise- und Boriersystems (24) nach einem der vorhergehenden Ansprüche in einem Druckwasserreaktor zur Beherrschung der anomalen Betriebsfälle:
a) Leck in einem Heizrohr eines Dampferzeugers und Verlust von Kühlmittel,
b) kleines Leck im Primärsystem mit ungenügender sekundärseitiger Wärmeabfuhr,
c) Füllstandshaltung im Reaktordruckbehälter bei Nullast heiß und nicht verfügbarem Volumenregelsystem, jedoch intaktem Primärsystem, und
d) Borieren des Primärsystems.

6. Verfahren zum Betrieb eines Sicherheitseinspeise- und Boriersystems (24) für einen Druckwasserreaktor mit einem Reaktorkühlsystem, umfassend ein Primärsystem und ein Sekundärsystem, zur Beherrschung der folgenden anomalen Betriebsfälle:
a) Leck in einem Heizrohr eines Dampferzeugers und Verlust von Kühlmittel,
b) kleines Leck im Primärsystem mit ungenügender sekundärseitiger Wärmeabfuhr,
c) Füllstandshaltung im Reaktordruckbehälter bei Nullast heiß und nicht verfügbarem Volumenregelsystem, jedoch intaktem Primärsystem, und
d) Borieren des Primärsystems,
wobei in dem Sicherheitseinspeise- und Boriersystem (24) eine Sicherheitseinspeisepumpe (2) mit einer Parallelschaltung aus einer Zusatzborierpumpe (11) und einer Bypass-Leitung mit einem Rückschlagventil (8) in Reihe geschaltet ist,
**dadurch gekennzeichnet**, daß den Pumpen (2,11) stromabwärts ein Einspeisestrang (10) nachgeschaltet ist, von dem eine Mindestmengenleitung (18) abzweigt, die in Reihe mit einer Mindestmengenzweigleitung (21m) mit einer ersten Drosselstelle (21) für eine große Mindestmenge oder mit einer Mindestmengenleitung (20m) mit einer zweiten Drosselstelle (20) für eine kleine Mindestmenge geschaltet wird, wobei
im Fall (a):
die Zweigleitung (21m) geöffnet und die Sicherheitseinspeisepumpe (2) in Betrieb gesetzt wird,
im Fall (b):
die Zweigleitung (20m) geöffnet und die Sicherheitseinspeisepumpe (2) in Betrieb genommen wird,
im Fall (c):
die Zweigleitung (20m) geöffnet und die Sicherheitseinspeisepumpe (2) sowie die Zusatzborierpumpe (11) in Betrieb gesetzt werden, und
im Fall (d):
die Mindestmengenleitung (18) abgesperrt wird und die Sicherheitseinspeisepumpe (2) sowie die Zusatzborierpumpe (11) in Betrieb gesetzt werden.

## Claims

1. Safety feed and boronizing system (24) for a pressurized water reactor having a safety feed pump (2) and an additional boronizing pump (11), wherein a bypass line with a shut-off part (8) is connected in parallel with the additional boronizing pump (11) and this parallel connection comprising the additional boronizing pump (11) and the shut-off part (8) is connected in series with the safety feed pump (2), characterized in that a feed branch (10) is connected downstream of the pumps (2, 11) in the flow direction, from which feed branch (10) a minimum quantity line (18) branches, which can be connected in series with one of at least two minimum quantity branch lines (20m, 21m), of which the one branch line (21m) has a first restrictor (21) for a large minimum quantity and the other branch line (20m) has a second restrictor (20) for a small minimum quantity.

2. Safety feed and boronizing system (24) according to claim 1, characterized in that the parallel connection comprising the additional boronizing pump (11) and the shut-off part (8) is connected downstream of the safety feed pump (2) in the flow direction.

3. Safety feed and boronizing system (24) according to one of claims 1 or 2, characterized in that the shut-off part (8) is a non-return valve (8).

4. Safety feed and boronizing system (24) according to one of the preceding claims, characterized in that the additional boronizing pump (11) is a centrifugal pump.

5. Use of a safety feed and boronizing system (24) according to one of the preceding claims in a pressurized water reactor for controlling abnormal cases of operation:
a) leak in a heating tube of a steam generator and loss of coolant,
b) small leak in the primary system with inadequate secondary-side heat dissipation,
c) maintaining the level in the reactor pressure container with zero load hot and unavailable volume control system, but intact primary system, and
d) boronizing the primary system.

6. Method for the operation of a safety feed and boronizing system (24) for a pressurized water reactor with a reactor cooling system, containing a primary system and a secondary system, for controlling the following abnormal cases of operation:
a) leak in a heating tube of a steam generator and loss of coolant,
b) small leak in the primary system with inadequate secondary-side heat dissipation,
c) maintaining the level in the reactor pressure container with zero load hot and unavailable volume control system, but intact primary system, and
d) boronizing the primary system,
wherein in the safety feed and boronizing system (24) a safety feed pump (2) is connected in series with a parallel connection comprising an additional boronizing pump (11) and a bypass line with a non-return valve (8), characterized in that a feed branch (10) is connected downstream of the pumps (2, 11), from which feed branch (10) a minimum quantity line (18) branches, which is connected in series with a minimum quantity branch line (21m) with a first restrictor (21) for a large minimum quantity or with a minimum quantity line (20m) with a second restrictor (20) for a small minimum quantity, wherein
in case (a):
the branch line (21m) is opened and the safety feed pump (2) is put into operation,
in case (b):
the branch line (20m) is opened and the safety feed pump (2) is put into operation,
in case (c):
the branch line (20m) is opened and the safety feed pump (2) and the additional boronizing pump (11) are put into operation, and
in case (d):
the minimum quantity line (18) is shut off and the safety feed pump (2) and the additional boronizing pump (11) are put into operation.

## Revendications

1. Système d'alimentation de sécurité et de traitement au bore (24) pour un réacteur à eau sous pression avec une pompe d'alimentation de sécurité (2) et une pompe de traitement au bore supplémentaire (11), une conduite à dérivation avec un organe de fermeture (8) étant branchée en parallèle avec la pompe de traitement au bore supplémentaire (11) et ce branchement en parallèle constitué de la pompe de traitement au bore supplémentaire (11) et de l'organe de fermeture (8) étant branché en série avec la pompe d'alimentation de sécurité (2),
caractérisé en ce que dans le sens de l'écoulement, une branche d'alimentation (10) est branchée à la suite des pompes (2, 11), branche à partir de laquelle dérive une conduite de quantité minimale (18) qui est commutable avec l'une d'au moins deux conduites de quantité minimale ramifiées (20m, 21m), parmi lesquelles la première conduite ramifiée (21m) présente un premier point d'étranglement (21) pour une grande quantité minimale et l'autre conduite ramifiée (20m) présente un deuxième point d'étranglement (20) pour une petite quantité minimale.

2. Système d'alimentation de sécurité et de traitement au bore (24) selon la revendication 1, caractérisé en ce que dans le sens de l'écoulement, le branchement en parallèle de la pompe de traitement au bore supplémentaire (11) et de l'organe de fermeture (8) est branché à la suite de la pompe d'alimentation de sécurité (2).

3. Système d'alimentation de sécurité et de traitement au bore (24) selon l'une des revendications 1 ou 2, caractérisé en ce que l'organe de fermeture (8) est un clapet anti-retour (8).

4. Système d'alimentation de sécurité et de traitement au bore (24) selon l'une des revendications précédentes, caractérisé en ce que la pompe de traitement au bore supplémentaire (11) est une pompe centrifuge.

5. Utilisation d'un système d'alimentation de sécurité et de traitement au bore (24) selon l'une des revendications précédentes dans un réacteur à eau sous pression pour la maîtrise des cas de fonctionnement anormaux :
a) fuite dans un tuyau de chauffage d'un générateur de vapeur et perte de produit de refroidissement,
b) petite fuite dans le système primaire avec une évacuation de chaleur insuffisante du côté secondaire,
c) maintien du niveau dans le récipient de pression du réacteur pour une charge nulle chaude et un système de régulation de volume non disponible, mais avec un système primaire intact, et
d) traitement au bore du système primaire.

6. Procédé pour le fonctionnement d'un système d'alimentation de sécurité et de traitement au bore (24) pour un réacteur à eau sous pression avec un système de refroidissement du réacteur, comprenant un système primaire et un système secondaire, pour la maîtrise des cas de fonctionnement anormaux suivants :
a) fuite dans un tuyau de chauffage d'un générateur de vapeur et perte de produit de refroidissement,
b) petite fuite dans le système primaire avec une évacuation de chaleur insuffisante du côté secondaire,
c) maintien du niveau dans le récipient de pression du réacteur pour une charge nulle chaude et un système de régulation de volume non disponible, mais avec un système primaire intact, et
d) traitement au bore du système primaire,
pour lequel dans le système d'alimentation de sécurité et de traitement au bore (24), une pompe d'alimentation de sécurité (2) est branchée en série avec un branchement en parallèle constitué d'une pompe de traitement au bore supplémentaire (11) et d'une conduite à dérivation avec un clapet anti-retour (8),
caractérisé en ce qu'une branche d'alimentation (10) est intercalée en aval à la suite des pompes (2, 11), branche à partir de laquelle dérive une conduite de quantité minimale (18) qui est branchée en série avec une conduite de quantité minimale ramifiée (21m) avec un premier point d'étranglement (21) pour une grande quantité minimale ou avec une conduite de quantité minimale (20m) avec un deuxième point d'étranglement (20) pour une petite quantité minimale, pour lequel
dans le cas (a):
la conduite ramifiée (21m) est ouverte et la pompe d'alimentation de sécurité (2) est mise en fonctionnement,
dans le cas (b):
la conduite ramifiée (20m) est ouverte et la pompe d'alimentation de sécurité (2) est mise en fonctionnement,
dans le cas (c):
la conduite ramifiée (20m) est ouverte et la pompe d'alimentation de sécurité (2) ainsi que la pompe de traitement au bore supplémentaire (11) sont mises en fonctionnement, et
dans le cas (d):
la conduite de quantité minimale (18) est fermée et la pompe d'alimentation de sécurité (2) ainsi que la pompe de traitement au bore supplémentaire (11) sont mises en fonctionnement.
